# EUROPÄISCHE PATENTSCHRIFT

(11) **EP 3 800 747 B1**
(45) Veröffentlichungstag und Bekanntmachung des Hinweises auf die Patenterteilung: **15.02.2023**
(21) Anmeldenummer: 20196140.6
(22) Anmeldetag: 15.09.2020
(51) Int. Cl.: H01R 13/639, A47L 9/26, H01R 13/72, H01R 35/02, A47L 5/36, B65H 75/28, B65H 75/42, H01R 24/22, H02G 11/02

(54) **KABELGEBUNDENES REINIGUNGSGERÄT**
WIRED CLEANING DEVICE
APPAREIL DE NETTOYAGE FILAIRE

(30) Priorität: 17.09.2019 DE 102019124947
(43) Veröffentlichungstag der Anmeldung: 07.04.2021
(73) Patentinhaber: Sprintus GmbH, 73642 Welzheim-Breitenfürst (DE)
(72) Erfinder: Lepold, Holger, 73635 Rudersberg (DE); Hofmann, Johannes, 73663 Berglen (DE)
(74) Vertreter: Glawe, Delfs, Moll

(56) Entgegenhaltungen:
- EP-A1- 3 287 060
- GB-A- 2 388 835
- US-A- 3 346 705
- US-A1- 2012 120 571

## Beschreibung

Die Erfindung betrifft ein kabelgebundenes Arbeitsgerät, insbesondere ein Sauggerät, sowie ein Verfahren zum Herstellen einer gesicherten Verbindung zwischen einem Anschlussteil eines kabelgebundenen Arbeitsgeräts, insbesondere eines Sauggeräts, und einem Steckverbinder.

Stromkabel elektrisch betriebener Arbeitsgeräte, wie beispielsweise elektrisch betriebener Reinigungsgeräte, können häufig nur durch einen Fachmann getauscht werden. Ein geräteseitiges Ende des Stromkabels ist in der Regel derart fest mit dem Arbeitsgerät verbunden, dass es nur durch Fachpersonal unter Zuhilfenahme von Werkzeug, bspw. durch Löten, und/oder Demontage des Arbeitsgeräts gewechselt werden kann. Dies erschwert beispielsweise den Austausch eines defekten Stromkabels und führt zu erhöhten Reparaturkosten und Ausfallzeiten des Arbeitsgeräts.

Insbesondere bei kabelgebundenen Arbeitsgeräten mit einer Aufrolleinrichtung ist das geräteseitige Ende des Stromkabels mit einer drehbar gelagerten Aufrolltrommel verbunden. Eine einfache Steckverbindung zwischen Kabel und Aufrolltrommel scheidet zumeist aus, da die Steckverbindung den hohen Zugkräften beim Auf- und Abrollen des Kabels nicht Stand hält. Zur Entlastung der Steckverbindung und/oder um ein ungewolltes Abziehen des Steckverbinders zu vermeiden, können zusätzlich Verriegelungs- und/oder Zugentlastungseinrichtungen für das Kabel vorgesehen werden. Diese sind meist mit dem Gehäuse des Arbeitsgeräts verschraubt, was den Austausch eines defekten Stromkabels zusätzlich erschwert.

Die EP 3 287 060 A1 offenbart ein mobiles Arbeitsgerät mit einer Aufrolleinrichtung für ein Kabel, wie bspw. einen Staubsauger. Zum Verbinden des Arbeitsgeräts mit dem Kabel ist eine elektrische Steckverbindung vorgesehen, die aus einer am maschinenseitigen Kabelende angeordneten Steckdose und einem an einer Seitenwand des Deckelteils des Arbeitsgeräts angeordneten Stecker besteht. Das von der verbundenen Steckdose 46 ausgehende Kabel ist durch einen radialen Schlitz geführt.

Die US 2012/0120571 A1 offenbart eine Warenpräsentations-Sicherheitsvorrichtung zum Ausstellen und Schützen eines Warenartikels. Die Vorrichtung umfasst ein Mittel zum Halten eines Stromadapterkabels an einem Sensorgehäuse, wenn der Warenartikel an dem Sensorgehäuse befestigt ist. Das Sensorgehäuse umfasst einen Stromausgangsanschluss mit einer Ablage, an der eine Außenwand mit einer Nut zum Aufnehmen und Halten eines Abschnitts des Stromadapterkabels ausgebildet ist. Der Abschnitt des Stromadapterkabels ist in der Nut zwischen einer eingesteckten Position, in der der Warenartikel nicht ohne weiteres am Sensorgehäuse befestigt werden kann, und einer eingesteckten und gekoppelten Position, in der der Warenartikel befestigt werden kann, drehbar angeordnet.

US 3 346 705 A offenbart auch relevanten Stand der Technik.

Der Erfindung liegt daher die Aufgabe zugrunde, ein Arbeitsgerät vorzustellen, bei dem die aus dem Stand der Technik bekannten Nachteile vermieden oder zumindest reduziert werden. Gelöst wird diese Aufgabe durch ein kabelgebundenes Arbeitsgerät gemäß dem Hauptanspruch, ein System gemäß Anspruch 12 und durch ein Verfahren zum Herstellen einer Verbindung zwischen einem Anschlussteil eines kabelgebundenen Arbeitsgeräts und einem Steckverbinder gemäß Anspruch 13. Vorteilhafte Weiterbildungen sind Gegenstand der abhängigen Ansprüche.

Demnach betrifft die Erfindung ein kabelgebundenes Arbeitsgerät, insbesondere Sauggerät, mit einem zwischen einer Verriegelungsstellung und einer Freigabestellung überführbaren elektrischen Anschlussteil. Erfindungsgemäß bildet das Arbeitsgerät bzw. eine Komponente des Arbeitsgeräts eine Hinterschneidung für einen mit dem Anschlussteil in der Verriegelungsstellung verbundenen Steckverbinder.

Die Erfindung betrifft ferner ein Verfahren zum Herstellen einer gesicherten Verbindung zwischen einem Anschlussteil eines kabelgebundenen Arbeitsgeräts, insbesondere eines Trockensaugers, und einem Steckverbinder mit den Schritten: Verbinden des Steckverbinders mit dem elektrischen Anschlussteil in einer Freigabestellung; und Überführen des Anschlussteils von der Freigabestellung in eine Verriegelungsstellung, wobei in der Verriegelungsstellung das Arbeitsgerät eine Hinterschneidung für den Steckverbinder bildet und das Überführen des Anschlussteils von der Freigabestellung in die Verriegelungsstellung durch eine Schwenkbewegung des Anschlussteils erfolgt. Bei dem kabelgebundenen Arbeitsgerät kann es sich bspw. um ein Reinigungsgerät wie ein Sauggerät, wie beispielsweise einen Trockensauger, handeln.

Das elektrische Anschlussteil ist zur Herstellung einer elektrischen Verbindung ausgebildet. Bei dem elektrischen Anschlussteil kann es sich um einen Teil eines elektrischen Steckverbinders, wie einen Stecker oder eine Buchse bzw. Steckdose, handeln. Steckverbinder dienen zum reversiblen Trennen und Verbinden von elektrischen Leitungen. Eine Haltekraft der gesteckten elektrischen Verbindung kann durch einen Formschluss der Steckverbinder oder eine zusätzliche mechanische Verriegelung gewährleistet sein. Das Anschlussteil kann an einer beliebigen Stelle des Arbeitsgeräts angeordnet sein und/oder gegenüber dem Arbeitsgerät beweglich angeordnet sein.

In der Verriegelungsstellung ist ein mit dem Anschlussteil verbundener Steckverbinder verriegelt, d.h. der Steckverbinder kann nicht vom Anschlussteil getrennt bzw. entfernt werden. Die Verriegelung der Steckverbindung kann durch eine Überführung des Anschlussteils in eine Freigabestellung gelöst werden. In der Freigabestellung kann ein Steckverbinder verbunden oder getrennt werden.

Als Hinterschneidung wird ein Element des Arbeitsgeräts bezeichnet, das gegenüber dem Arbeitsgerät vorsteht und damit verhindert, dass ein mit dem Anschlussteil in der Verriegelungsstellung verbundener Steckverbinder von dem Anschlussteil getrennt werden kann.

Als Aufrolleinrichtungen oder Kabelaufroller werden Einrichtungen zum Aufrollen oder Aufspulen eines Kabels bezeichnet. Bei dem Kabel kann es sich um ein elektrisches Kabel bzw. Stromkabel handeln. Die Aufrolleinrichtung umfasst in der Regel eine Aufrolltrommel zur Aufnahme des Kabels, die drehbar um eine Drehachse gelagert ist und ggf. zusätzlich ein Bedien- und/oder Betätigungselement, wie beispielsweise eine manuelle Handkurbel, aufweist. Durch eine Kurbelbewegung initiiert die Aufrolleinrichtung eine Aufrollung des Kabels. Ein freiliegendes Ende des Kabels, welches mit einem Netzstecker versehen sein kann, kann somit über die Aufrolleinrichtung aufgerollt und verstaut werden. Das Anschlussteil kann als Teil der Aufrolltrommel ausgebildet sein und ist somit ebenfalls drehbar um die Drehachse der Aufrolltrommel angeordnet. Zudem kann das Anschlussteil als beweglicher Teil der Anschlusstrommel ausgebildet sein, ohne die Funktionsweise der Aufrolleinrichtung zu beeinträchtigen.

Die Erfindung beruht auf der Erkenntnis, dass eine Arretierung einer Steckverbindung über einen an der Kabeltrommel angeordnetes und zwischen einer Verriegelungsstellung und einer Freigabestellung überführbares Anschlussteil möglich ist und dadurch die Steckverbindung gezielt gesichert oder gelöst werden kann. Die Arretierung erfolgt über einen als Hinterschneidung bezeichnetes Element des Arbeitsgeräts, das gegenüber dem Arbeitsgerät derart vorsteht, dass der verbundene Steckverbinder in Einsteckrichtung fixiert ist. In der Freigabestellung kann ein mit dem Anschlussteil verbundener Steckverbinder aus dem Anschlussteil entfernt werden, während dies in der Verriegelungsstellung durch die Arretierung verhindert ist. Die Steckverbindung kann zudem durch einen Bediener selbstständig und ohne die Verwendung von Werkzeug getrennt bzw. verbunden werden.

Eine Überführung des Anschlussteils zwischen der Freigabestellung und der Verriegelungsstellung ist durch eine Schwenkbewegung erfolgt.

Dazu ist das Anschlussteil drehbar um eine Rotationsachse gelagert. Die Schwenkbewegung kann im Wesentlichen quer zu Einsteckrichtung des Anschlussteils erfolgen. Ein derart schwenkbar gelagertes Anschlussteil wird bspw. durch seitliches Verschieben eines verbundenen Steckverbinders (oder eines daran angeschlossenen Kabels) zwischen der Verriegelungs- und Freigabestellung reversibel überführt.

In der Freigabestellung des Anschlussteils kann ein Verbinden oder Trennen des Steckverbinders gestattet sein. In der Freigabestellung bildet das Arbeitsgerät keine Hinterschneidung für den verbundenen Steckverbinder. Der Steckverbinder kann durch einen Bediener ohne Zuhilfenahme von Werkzeug mit dem Anschlussteil verbunden und von diesem getrennt werden, bspw. durch Ein- oder Ausstecken. In der Verriegelungsstellung des Anschlussteils kann das Verbinden oder Trennen des Steckverbinders verhindert sein. Durch die Hinterschneidung ist der Steckverbinder in der Einsteckrichtung fixiert und kann nicht aus dem Anschlussteil entfernt werden.

Das kabelgebundene Arbeitsgerät kann eine Aufrolleinrichtung zum Aufrollen eines Kabels mit einer drehbar um eine Drehachse gelagerten Aufrolltrommel aufweisen, wobei das Anschlussteil als Teil der Aufrolleinrichtung ausgebildet ist. Durch die Arretierung der Steckverbindung ist ein ordnungsgemäßes Aufrollen des Kabels über die Aufrolleinrichtung gewährleistet und die Aufrolleinrichtung kann ohne Einschränkungen betrieben werden.

Vorzugsweise ist das Anschlussteil drehbar mit der Aufrolltrommel verbunden. Die drehend gelagerte Aufrolltrommel ist als Hinterschneidung für den mit dem Anschlussteil in der Verriegelungsstellung verbundenen Steckverbinder ausgebildet. Vorzugsweise erfolgt die Schwenkbewegung des Anschlussteils senkrecht in Richtung der Drehachse der Aufrolltrommel. Dadurch wird ein ungewolltes Verschwenken des Anschlussteils während des Betriebs der Aufrolleinrichtung vermieden.

Das Anschlussteil kann in der Verriegelungsstellung eine Einsteckrichtung vorgeben, die im Wesentlichen tangential zur Drehachse verläuft. Dies ermöglicht den ordnungsgemäßen Betrieb der Aufrolleinrichtung beim Aufrollen des angeschlossenen Kabels.

Die Hinterschneidung des Arbeitsgeräts kann durch mindestens ein erstes Verriegelungselement gebildet sein. Vorzugsweise ist das Verriegelungselement an einem horizontal ausgerichteten Wandabschnitt des Arbeitsgeräts angeordnet. Weiter vorzugsweise erstreckt sich das Verriegelungselement im Wesentlichen quer zur Einsteckrichtung des Anschlussteils in der Verriegelungsstellung. Das Verriegelungselement kann in Einsteckrichtung betrachtet einigen Abstand zu dem Anschlussteil aufweisen, um eine Zugänglichkeit das Anschlussteils in Freigabestellung nicht zu beeinträchtigen. Das Verriegelungselement kann als Teil der Aufrolltrommel ausgebildet sein.

Die Hinterschneidung kann ein zum ersten Verriegelungselement gegenüberliegend angeordnetes zweites Verriegelungselement aufweisen. Das gegenüberliegende zweite Verriegelungselement kann spiegelsymmetrisch zum ersten Verriegelungselement ausgebildet sein. Die Verriegelungselemente sind vorzugsweise so platziert, dass ein Abstand zwischen den Verriegelungselementen kleiner ist als eine maximale Breite des Steckverbinders. Durch die gegenüberliegende Anordnung der Verriegelungselemente wird die Haltekraft der Steckverbindung erhöht. Dadurch ist die Steckverbindung bspw. während des Betriebs der Aufrolleinrichtung vor hohen Zugkräften, die auf die Steckverbindung einwirken, geschützt.

Das erste und/oder zweite Verriegelungselement kann sich im Wesentlich quer zur Einsteckrichtung des Anschlussteils in der Verriegelungsstellung erstrecken. Durch die Ausrichtung quer zur Einsteckrichtung bzw. im Wesentlichen entlang der Schwenkrichtung kann die Verriegelung durch die Schwenkbewegung des Anschlussteils gesteuert werden. Durch eine Verschiebung des Anschlussteils in die Verriegelungsstellung werden die Verriegelungselemente derart am Steckverbinder platziert, dass sie diesen fixieren.

Das Anschlussteil kann als Steckdose ausgebildet sein. Die Ausbildung des Anschlussteils als handelsübliche Steckdose (z.B. Kaltgerätesteckdose) erlaubt die Verwendung handelsüblicher Kabel und Steckverbinder. Die Aufrolleinrichtung kann ferner eine Handkurbel zur Betätigung der Aufrolleinrichtung aufweisen. Über die manuelle Handkurbel kann die Aufrolltrommel so ausgerichtet werden, dass das Anschlussteil für einen Bediener sichtbar und erreichbar angeordnet ist. Das Arbeitsgerät kann zusätzlich eine Zugentlastungseinrichtung für das Kabel aufweisen. Bei der Zugentlastungseinrichtung kann es sich um eine mechanische Schutzvorrichtung handeln, die das Kabel einklemmt oder derart fixiert, dass es vor einem Herausreißen geschützt ist.

Die Erfindung betrifft ferner ein System aus einem entsprechenden kabelgebundenen Arbeitsgerät und einem Kabel mit einem Steckverbinder, wobei der Steckverbinder zumindest eine Verjüngung aufweist, die im Wesentlichen komplementär zu der Hinterschneidung der Aufrolltrommel ausgebildet ist. Durch eine Anpassung der Geometrie der Hinterschneidung in Bezug auf die Geometrie der Verjüngung oder andersrum kann die Arretierung des Steckverbinders weiter verbessert werden.

Die Erfindung betrifft außerdem ein Verfahren zum Herstellen einer gesicherten Verbindung, wobei ein Überführen des Anschlussteils von der Freigabestellung in die Verriegelungsstellung durch eine Schwenkbewegung des Anschlussteils erfolgt. Durch eine einfache Schwenkbewegung kann ein Verwender die Steckverbindung auf einfache Weise und ohne Zuhilfenahme von Werkzeug arretieren. Analog ist es möglich, durch eine Schwenkbewegung des Anschlussteils von der Verriegelungsstellung in die Freigabestellung die Steckverbindung zu trennen und beispielsweise das Stromkabel auszutauschen.

Das erfindungsgemäße Verfahren kann mit weiteren im Zusammenhang mit dem erfindungsgemäßen kabelgebundenen Arbeitsgerät beschriebenen Merkmalen fortgeführt werden. Das erfindungsgemäße kabelgebundene Arbeitsgerät kann mit weiteren im Zusammenhang mit dem erfindungsgemäßen Verfahren beschriebenen Merkmalen fortgebildet werden.

Die Erfindung wird nachfolgend anhand eines Ausführungsbeispiels unter Bezugnahme auf die beigefügten Zeichnungen beispielhaft beschrieben. Es zeigen:
- Figur 1:: eine schematische Darstellung einer Aufrolleinrichtung eines erfindungsgemäßen kabelgebundenen Arbeitsgeräts mit einem getrennten Steckverbinder in einer Seitenansicht;
- Figur 2:: eine schematische Darstellung der Aufrolleinrichtung der Figur 1 mit einem verbundenen Steckverbinder in einer Seitenansicht;
- Figur 3:: eine schematische Darstellung der Aufrolleinrichtung der Figur 1 mit einem Anschlussteil in einer Freigabestellung und einem getrennten Steckverbinder von der Seite (a) und im Schnitt (b);
- Figur 4:: eine schematische Darstellung der Aufrolleinrichtung der Figur 1 mit einem Anschlussteil in einer Freigabestellung und einem verbundenen Steckverbinder von der Seite (a) und im Schnitt (b);
- Figur 5:: eine schematische Darstellung der Aufrolleinrichtung der Figur 1 mit einem Anschlussteil in einer Verriegelungsstellung und einem verbundenen Steckverbinder von der Seite (a) und im Schnitt (b) ;
- Figur 6:: eine dreidimensionale Darstellung der Aufrolleinrichtung der Figur 1 mit einem getrennten Steckverbinder;
- Figur 7:: eine dreidimensionale Darstellung der Aufrolleinrichtung der Figur 1 mit einem Anschlussteil in einer Freigabestellung mit einem verbundenen Steckverbinder; und
- Figur 8:: eine dreidimensionale Darstellung der Aufrolleinrichtung der Figur 1 mit einem Anschlussteil in einer Verriegelungsstellung mit einem verbundenen Steckerbinder;
- Figur 9:: eine schematische Darstellung der Aufrolleinrichtung der Figur 1 mit einer Zugentlastungseinrichtung.

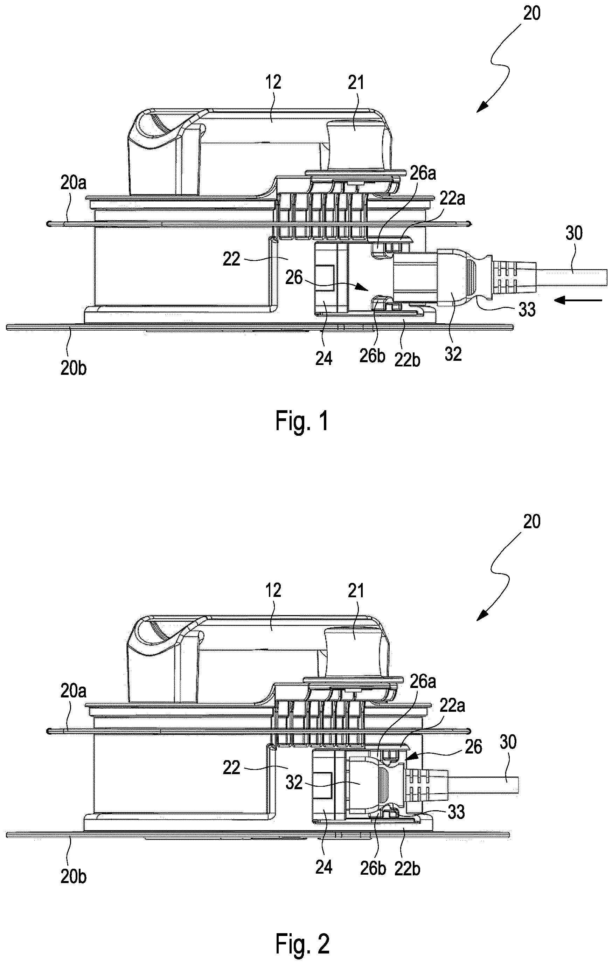

Figur 1 zeigt eine als Teil eines kabelgebundenen Arbeitsgerätes (nicht dargestellt) ausgebildete Aufrolleinrichtung 20 und ein separates Stromkabel 30 mit einem Steckverbinder 32. Der Steckverbinder 32 kann mit der Aufrolleinrichtung 20 eine Steckverbindung eingehen (siehe Figur 2) und dadurch eine Stromversorgung für die Aufrolleinrichtung 20 und/oder das kabelgebundenes Reinigungsgerät bereitstellen.

Bei dem kabelgebundenen Arbeitsgerät kann es sich um ein Reinigungsgerät, wie einen Staubsauger zur Gebäudereinigung, wie bspw. einen Trockensauger, handeln. Das kabelgebundene Reinigungsgerät ist jedoch nicht auf Trockensauger beschränkt, sondern umfasst z.B. Sauggeräte jeder Art für einen professionellen und/oder privaten Einsatz, mithin auch Nasssauger. Als Arbeitsgerät kommt auch ein Rasenmäher in Betracht. Das kabelgebundene Arbeitsgerät ist ferner nicht auf ein Arbeitsgerät mit einer Aufrolleinrichtung beschränkt, sondern wird nachfolgend lediglich beispielshalft im Zusammenhang mit einer Aufrolleinrichtung beschrieben.

Das Arbeitsgerät weist ein, zumeist mobiles, Gehäuse auf, von dem ein Griff 12 und eine obere Abdeckung 20a in der Figur 1 gezeigt sind. Im Gehäuseinneren zwischen der oberen Abdeckung 20a und einer unteren Abdeckung 20b kann ein aufgerolltes Kabel 30 verstaut werden.

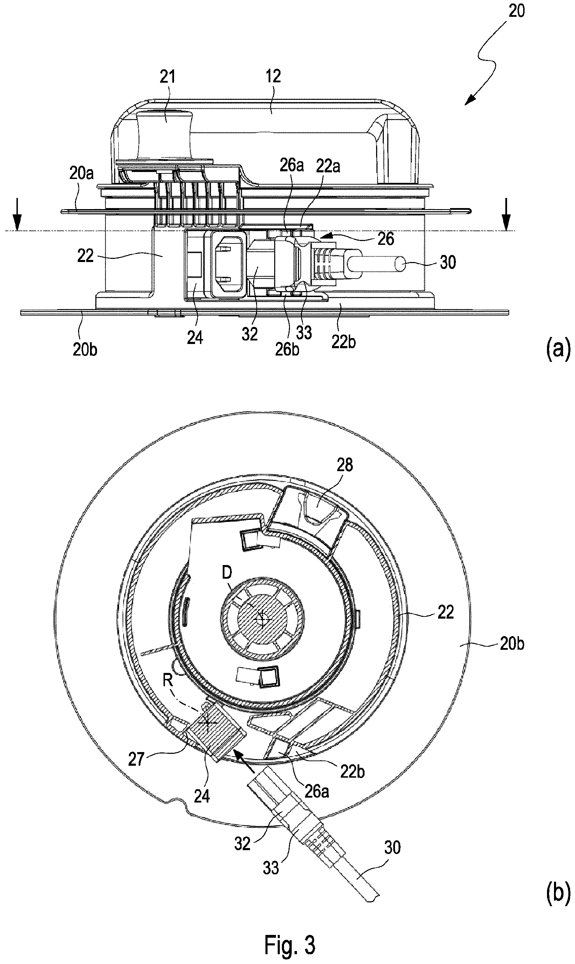

Die Aufrolleinrichtung 20 weist zum Aufrollen bzw. Aufspulen des Kabels 30 eine Aufrolltrommel 22 auf, die drehbar um eine Drehachse D (siehe Figur 3b) gelagert ist. Die Drehachse D verläuft senkrecht zu einer in Figur 1 gezeigten Einsteckrichtung (entlang der Pfeilrichtung) des Kabels 30. Zur Betätigung der Aufrolleinrichtung 20 weist diese eine mit der Aufrolltrommel 22 verbundene Handkurbel 21 auf. Durch eine Kurbelbewegung der Handkurbel 21 um die Drehachse D dreht sich die Aufrolltrommel 22 und das Kabel 30 wird aufgerollt. Die Handkurbel 21 dreht sich beim Abrollen des Kabels 30 entsprechend andersrum mit.

Die Aufrolleinrichtung 20 weist ein elektrisches Anschlussteil 24 zur Herstellung einer Steckverbindung mit dem Steckverbinder 32 auf. Bei dem Anschlussteil 24 handelt sich bevorzugt ebenfalls um einen Steckverbinder, der kompatibel zu dem Steckverbinder 32 ausgebildet ist. In dem dargestellten Beispiel ist das Anschlussteil 24 als (handelsübliche) Steckdose in Form einer Kaltgerätesteckdose, und der Steckverbinder als (handelsüblicher) Stecker in Form eines Kaltgerätesteckers ausgebildet, dies ist jedoch keinesfalls zwingend, vielmehr können kompatible Steckverbinder jeglicher Art verwendet werden. Der Steckverbinder ist außerdem drehbeweglich um eine Rotationsachse R gelagert (siehe Figur 3b).

Das Anschlussteil 24 ist derart mit der Aufrolltrommel 22 verbunden, dass es sich bei einer Betätigung der Aufrolleinrichtung 20 mit der Aufrolltrommel 22 mitdreht. Zudem ist das Anschlussteil 24 derart beweglich mit der Aufrolltrommel 22 verbunden, dass das Anschlussteil 22 zwischen einer Freigabestellung und einer Verriegelungsstellung überführbar ist.

Figur 2 zeigt die Aufrolleinrichtung 20 mit einem verbundenen Steckverbinder 32. Zur Verriegelung der Steckverbindung weist die Aufrolltrommel 22 an einem oberen Wandabschnitt 22a und an einem unteren Wandabschnitt 22b jeweils ein Verriegelungselement 26a, 26b auf. Durch eine Überführung von der Freigabestellung in die Verriegelungsstellung kann der Steckverbinder 32 so arretiert werden, dass die Verriegelungselemente 26a, 26b in eine Verjüngung 33 des Steckverbinders 32 eingreifen und diesen in Einsteckrichtung fixieren.

Anhand der Figuren 3 bis 5 wird nachfolgend die Arretierung des Steckverbinders 32 bzw. die Überführung des Steckverbinders 32 zwischen der Verriegelungs- und Freigabestellung beschrieben.

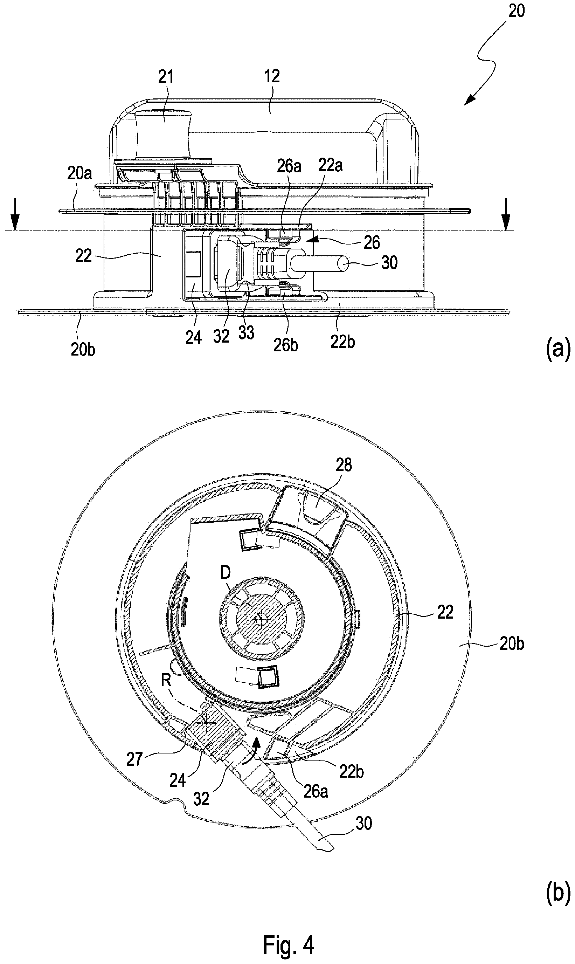

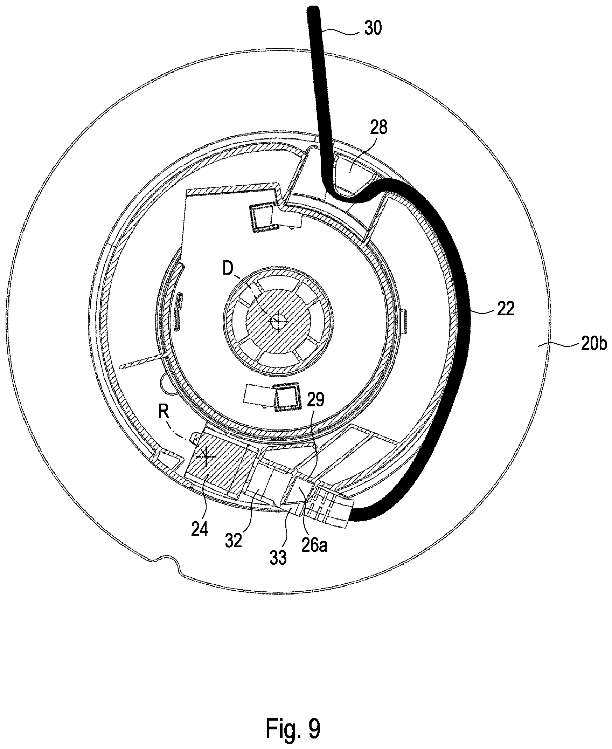

Figur 3 zeigt den Steckverbinder 32 samt Kabel 30 in einem von dem Anschlussteil 24 getrennten Zustand. Das Anschlussteil 24 befindet sich in der Freigabestellung, wobei die Einsteckrichtung in Pfeilrichtung (Fig. 3a) ausgerichtet ist. In der Freigabestellung des Anschlussteils 24 kann der Steckverbinder 32 mühelos verbunden oder wieder getrennt werden. In Figur 4 ist der Steckverbinder 32 in einem verbundenen Zustand gezeigt, wobei das Anschlussteil 24 weiterhin in Freigabestellung angeordnet ist. Ein ordnungsgemäßer Betrieb der Aufrolleinrichtung ist in der Freigabestellung jedoch nicht ohne weiteres gewährleistet, da die Steckverbindung bspw. durch auftretende Zugkräfte getrennt werden kann. Wie nachstehend im Zusammenhang mit Figur 9 beschrieben, kann durch eine zusätzliche Zugentlastungseinrichtung 28 ein Schutz für das Kabel 30 vor dem Herausreißen geschaffen werden. Wie aus den Figuren 3 und 4 ersichtlich, ist das dargestellte Verriegelungselement 26a nicht in einer Wirkverbindung mit dem Steckverbinder 32.

Eine Überführung des Anschlussteils 24 in eine Verriegelungsstellung erfolgt in dem dargestellten Ausführungsbeispiel durch eine Schwenkbewegung entlang der in Fig. 4b dargestellten Pfeilrichtung. Dabei führt das Anschlussteil eine Schwenkbewegung um die Rotationsachse R durch. Die Schwenkbewegung erfolgt ferner in einer Ebene senkrecht zu der Drehachse D der Aufrolltrommel 22. Eine Schwenkbewegung des Anschlussteils 24 kann ein Bediener besonders einfach durch seitliches Verschieben des Steckverbinders erzeugen.

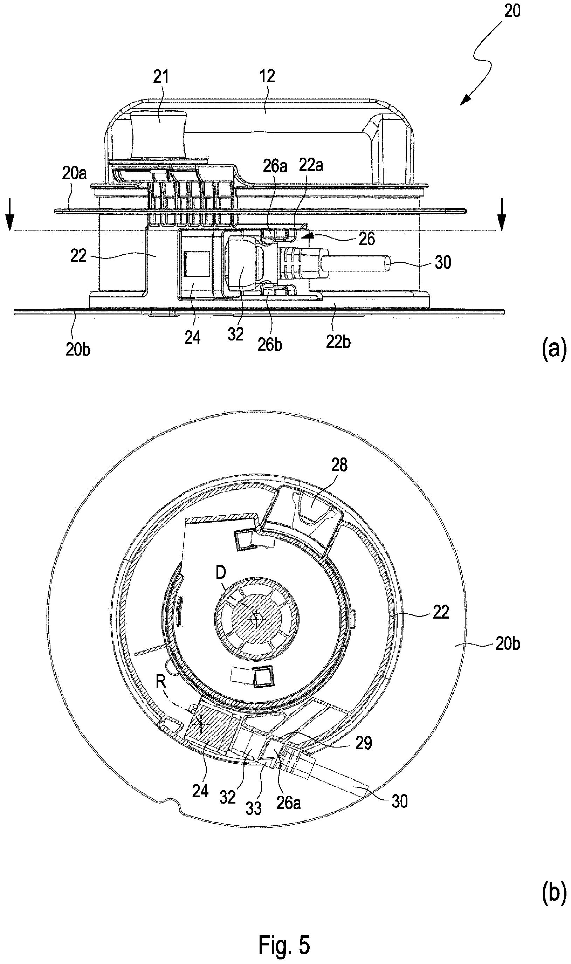

Figur 5 zeigt das Anschlussteil 24 in der Verriegelungsstellung mit verbundenem Steckverbinder 32. In dieser Stellung bildet das Verriegelungselement 26a, 26b eine Hinterschneidung 26 für den Steckverbinder 32. Um die Verriegelungswirkung zu erhöhen, kann das Verriegelungselement 26a, 26b kompatibel zu einer vorhandenen Verjüngung 33 des Steckverbinders ausgebildet sein oder andersrum. Das Verriegelungselement 26a, 26b ist im Wesentlichen in Richtung der Schwenkrichtung ausgebildet und somit im Wesentlichen quer zur Einsteckrichtung des Anschlussteils 24. Dies erlaubt es dem Verriegelungselement 26a, 26b bei der Schwenkbewegung zunehmend weiter in die Verjüngung 33 einzugreifen. In anderen Worten, der Steckverbinder 32 wird durch die Schwenkbewegung zunehmend weiter auf das Verriegelungselement 26a, 26b geschoben und das Anschlussteil 24 in die Verriegelungsstellung überführt. Ein Wandabschnitt der Aufrolltrommel 22 dient als Anschlag 29 für den Steckverbinder 32 in der Verriegelungsstellung. Sobald das Anschlussteil 24 die Verriegelungsstellung erreicht hat, ist der Steckverbinder 32 arretiert und ein Trennen der Steckverbindung wird verhindert. Zusätzlich kann eine (nicht dargestellte) Rastnase bei Erreichen der Verriegelungsstellung in eine entsprechende Vertiefung einrasten.

In der Verriegelungsstellung ist die Einsteckrichtung des Anschlussteils 24 im Wesentlichen tangential zu einer durch die Aufrolltrommel 22 vorgegebenen Kreisbewegung ausgerichtet. In der Verriegelungsstellung ist dann ein ordnungsgemäßer Betrieb der Aufrolleinrichtung 20 gewährleistet. Soll der Steckverbinder 32 von dem Anschlussteil 24 getrennt werden, muss das Anschlussteil 24 zunächst zurück in die Freigabestellung überführt werden. Dies erfolgt analog durch eine Schwenkbewegung in eine entgegengesetzte Richtung. Ein an der Aufrolltrommel 22 angeordneter Vorsprung dient als Anschlag 27 für das Anschlussteil 24 in der Freigabestellung. In der Freigabestellung des Anschlussteils kann der Steckverbinder anschließend problemlos getrennt werden.

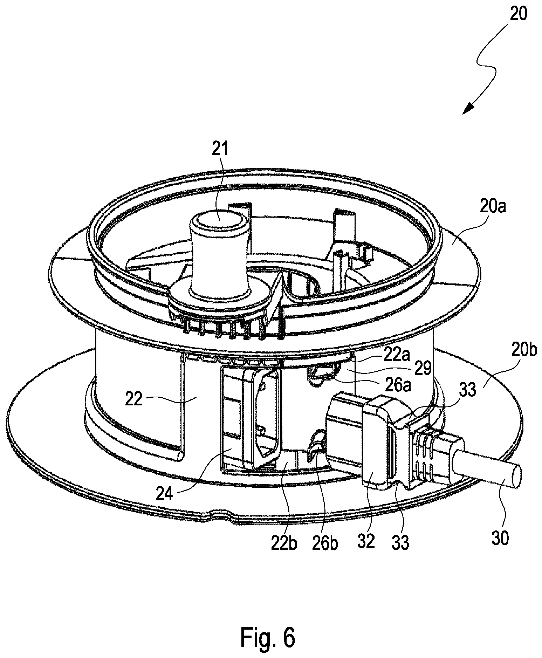

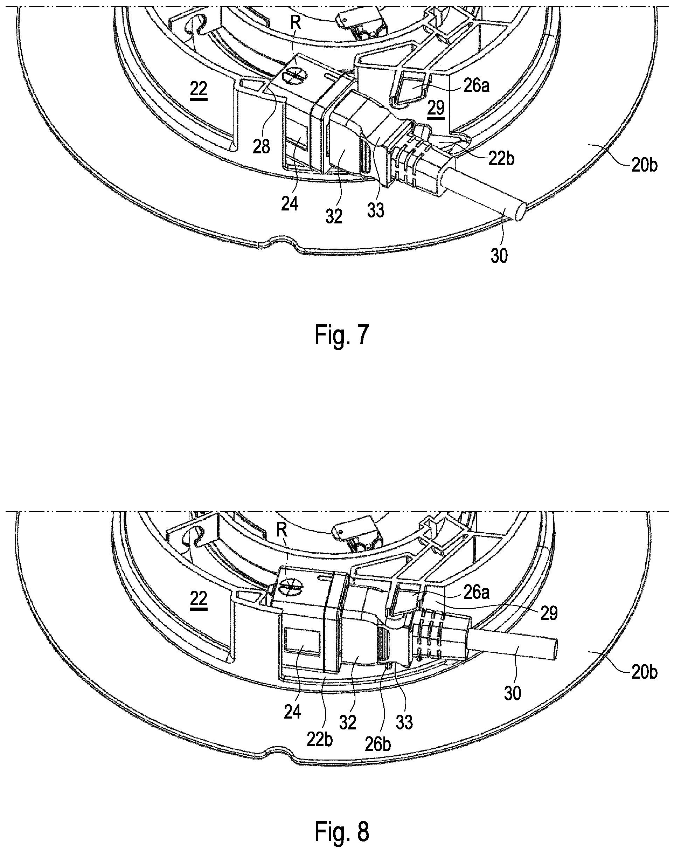

In den Figuren 6 bis 8 ist ein System aus der Aufrolleinrichtung 20 und dem aufzurollenden Kabel 30 in den unterschiedlichen Zuständen noch einmal in einer dreidimensionalen Ansicht gezeigt. Anhand der Figuren 6 bis 8 lässt sich außerdem das Verfahren zum Herstellen einer Verbindung zwischen dem Anschlussteil 24 und dem Steckverbinder 32 nachvollziehen. Der Steckverbinder 32 ist zunächst von dem Anschlussteil 24 in Freigabestellung getrennt (Figur 6). Figur 7 zeigt das Verbinden des Steckverbinders 32 mit dem Anschlussteil 24 in Freigabestellung. Die gegenüberliegend angeordneten Verriegelungselemente 26a, 26b sind in der Freigabestellung nicht in Eingriff mit dem Steckverbinder 32 und bilden keine Hinterschneidung für den Steckverbinder 32. In Figur 8 ist das Anschlussteil 24 in die Verriegelungsstellung überführt, in der die Aufrolltrommel 22 durch die Verriegelungselemente 26a und 26b eine Hinterschneidung für den verbundenen Steckverbinder 32 bildet. Der Steckverbinder 32 ist somit durch die sich im Wesentlichen quer zur Einsteckrichtung erstreckenden Verriegelungselemente in Einsteckrichtung arretiert. Das Überführen des Anschlussteils (24) zwischen der Freigabestellung und der Verriegelungsstellung erfolgt reversibel durch eine Schwenkbewegung des Anschlussteils (24).

Gemäß Figur 9 weist das Arbeitsgerät zusätzlich eine Zugentlastungseinrichtung 28 auf, die das Kabel 30 einklemmt. Die Zugentlastungseinrichtung 28 ist in dieser Ausführungsform als Teil der Aufrolleinrichtung 20 ausgebildet und gegenüberliegend zu dem Anschlussteil 24 angeordnet. Die Zugentlastungseinrichtung 28 ist in Form eines Hakens ausgebildet, der eine Kabelführung für das flexible Kabel 30 vorgibt, die ein Herausreißen des Kabels 30 verhindert. Das Kabel 30 kann manuell durch einen Bediener mit der Zugentlastungseinrichtung 28 verbunden bzw. von dieser getrennt werden.

### Bezugszeichenliste:

- 12: Griff
- 20: Aufrolleinrichtung
- 20a: obere Abdeckung
- 20b: untere Abdeckung
- 21: Bedienelement
- 22: Aufrolltrommel
- 22a: oberer Wandabschnitt
- 22b: unterer Wandabschnitt
- 24: Anschlussteil
- 26: Hinterschneidung
- 26a: erstes Verriegelungselement
- 26b: zweites Verriegelungselement
- 27: Anschlag
- 28: Zugentlastungseinrichtung
- 30: Kabel
- 32: Steckverbinder
- 33: Verjüngung
- D: Drehachse
- R: Rotationsachse

## Patentansprüche

1. Kabelgebundenes Arbeitsgerät, insbesondere Sauggerät, mit einem zwischen einer Verriegelungsstellung und einer Freigabestellung überführbaren elektrischen Anschlussteil (24), wobei das Arbeitsgerät eine Hinterschneidung (26) für einen mit dem Anschlussteil (24) in der Verriegelungsstellung verbundenen Steckverbinder (32) bildet, und das Anschlussteil (24) drehbar um eine Rotationsachse (R) gelagert ist und **dadurch gekennzeichnet dass** das Anschlussteil (24) zwischen der Freigabestellung und der Verriegelungsstellung eine Schwenkbewegung ausführt.

2. Kabelgebundenes Arbeitsgerät nach Anspruch 1, dessen Anschlussteil (24) in der Freigabestellung ein Verbinden oder Trennen des Steckverbinders (32) gestattet.

3. Kabelgebundenes Arbeitsgerät nach einem der voranstehenden Ansprüche, dessen Anschlussteil (24) in der Verriegelungsstellung das Verbinden oder Trennen des Steckverbinders (32) verbietet.

4. Kabelgebundenes Arbeitsgerät nach einem der voranstehenden Ansprüche, mit einer Aufrolleinrichtung (20) zum Aufrollen eines Kabels (30) mit einer drehbar um eine Drehachse (D) gelagerten Aufrolltrommel (22), wobei das Anschlussteil (24) als Teil der Aufrolleinrichtung (20) ausgebildet ist.

5. Kabelgebundenes Arbeitsgerät nach Anspruch 4, wobei die Aufrolltrommel (22) als Hinterschneidung (26) für den mit dem Anschlussteil (24) in der Verriegelungsstellung verbundenen Steckverbinder (32) ausgebildet ist.

6. Kabelgebundenes Arbeitsgerät nach einem der Ansprüche 4 oder 5, dessen Anschlussteil (24) in der Verriegelungsstellung eine Einsteckrichtung vorgibt, die im Wesentlichen tangential zur Drehachse (D) verläuft.

7. Kabelgebundenes Arbeitsgerät nach einem der Ansprüche 4 bis 6, dessen Anschlussteil (24) von der Freigabestellung in die Verriegelungsstellung eine Schwenkbewegung in Richtung der Drehachse (D) durchführt.

8. Kabelgebundenes Arbeitsgerät nach einem voranstehenden Ansprüche, dessen Hinterschneidung (26) durch mindestens ein erstes Verriegelungselement (26a, 26b) gebildet ist, vorzugsweise ist das Verriegelungselement (26a, 26b) an einem horizontal ausgerichteten Wandabschnitt (22a, 22b) des Arbeitsgeräts angeordnet, weiter vorzugsweise erstreckt sich das Verriegelungselement (26a, 26b) im Wesentlichen quer zur Einsteckrichtung des Anschlussteils (24) in der Verriegelungsstellung.

9. Kabelgebundenes Arbeitsgerät nach Anspruch 8 sofern auf einen der Ansprüche 4 bis 7 bezogen, dessen erstes Verriegelungselement als Teil der Aufrolltrommel (22) ausgebildet ist.

10. Kabelgebundenes Arbeitsgerät nach einem der Ansprüche 8 oder 9 mit einem zum ersten Verriegelungselement (26a, 26b) gegenüberliegend angeordneten zweiten Verriegelungselement (26a, 26b) .

11. Kabelgebundenes Arbeitsgerät nach einem der voranstehenden Ansprüche, dessen Anschlussteil (24) als Steckdose ausgebildet ist und/oder wobei das Arbeitsgerät zusätzlich eine Zugentlastungseinrichtung für das Kabel (30) aufweist.

12. System aus einem kabelgebundenem Arbeitsgerät gemäß einem der voranstehenden Ansprüche und einem Kabel (30) mit einem Steckverbinder (32), wobei der Steckverbinder (32) zumindest eine Verjüngung (33) aufweist, die im Wesentlichen komplementär zu der Hinterschneidung (26) des Arbeitsgeräts ausgebildet ist.

13. Verfahren zum Herstellen einer gesicherten Verbindung zwischen einem Anschlussteil (24) eines kabelgebundenen Arbeitsgeräts, insbesondere eines Trockensaugers, und einem Steckverbinder (32) mit den Schritten:
- Verbinden des Steckverbinders (32) mit dem elektrischen Anschlussteil (24) in einer Freigabestellung;
- Überführen des Anschlussteils (24) von der Freigabestellung in eine Verriegelungsstellung, wobei in der Verriegelungsstellung das Arbeitsgerät eine Hinterschneidung (26) für den Steckverbinder (32) bildet und **dadurch gekennzeichnet dass** das Überführen des Anschlussteils (24) von der Freigabestellung in die Verriegelungsstellung durch eine Schwenkbewegung des Anschlussteils (24) erfolgt.

## Claims

1. Corded tool, in particular vacuum cleaner, having an electrical connection part (24) that can be switched between a locking position and a release position, wherein the tool forms an undercut (26) for a plug connector (32) that is connected to the connection part (24) in the locking position, and the connection part (24) is mounted such that it can rotate about an axis of rotation (R), and **characterized in that** the connection part (24) executes a pivoting movement between the release position and the locking position.

2. Corded tool according to Claim 1, of which the connection part (24) permits the plug connector (32) to be connected or disconnected in the release position.

3. Corded tool according to one of the preceding claims, of which the connection part (24) prohibits the plug connector (32) from being connected or disconnected in the locking position.

4. Corded tool according to one of the preceding claims, having a winding device (20) for winding up a cable (30), comprising a winding drum (22) that is mounted such that it can rotate about an axis of rotation (D), wherein the connection part (24) is designed as part of the winding device (20).

5. Corded tool according to Claim 4, wherein the winding drum (22) is designed as an undercut (26) for the plug connector (32) that is connected to the connection part (24) in the locking position.

6. Corded tool according to either of Claims 4 and 5, of which the connection part (24), in the locking position, predefines an insertion direction which extends substantially tangentially to the axis of rotation (D).

7. Corded tool according to one of Claims 4 to 6, of which the connection part (24) carries out a pivoting movement in the direction of the axis of rotation (D) from the release position into the locking position.

8. Corded tool according to one of the preceding claims, of which the undercut (26) is formed by at least one first locking element (26a, 26b), preferably the locking element (26a, 26b) is arranged on a horizontally aligned wall section (22a, 22b) of the tool, more preferably the locking element (26a, 26b) extends substantially transversely with respect to the insertion direction of the connection part (24) in the locking position.

9. Corded tool according to Claim 8 if related to one of Claims 4 to 7, of which the first locking element is designed as part of the winding drum (22).

10. Corded tool according to either of Claims 8 and 9, having a second locking element (26a, 26b) arranged opposite the first locking element (26a, 26b).

11. Corded tool according to one of the preceding claims, of which the connection part (24) is designed as a socket and/or wherein the tool additionally has a strain relief device for the cable (30).

12. System comprising a corded tool according to one of the preceding claims and a cable (30) having a plug connector (32), wherein the plug connector (32) has at least one taper (33), which is designed to be substantially complementary to the undercut (26) of the tool.

13. Method for producing a secured connection between a connection part (24) of a corded tool, in particular a dry vacuum cleaner, and a plug connector (32), comprising the steps:
- connecting the plug connector (32) to the electrical connection part (24) in a release position;
- transferring the connection part (24) from the release position to a locking position, wherein, in the locking position, the tool forms an undercut (26) for the plug connector (32), and
**characterized in that**
the connection part (24) is transferred from the release position to the locking position by a pivoting movement of the connection part (24).

## Revendications

1. Appareil de travail filaire, notamment appareil d'aspiration, comprenant une partie de raccordement électrique (24) pouvant passer entre une position de verrouillage et une position de libération, dans lequel l'appareil de travail forme une contre-dépouille (26) pour un connecteur (32) relié à la partie de raccordement (24) dans la position de verrouillage, et la partie de raccordement (24) est montée de manière à pouvoir être tournée autour d'un axe de rotation (R), et **caractérisé en ce que** la partie de raccordement (24) exécute un mouvement de pivotement entre la position de libération et la position de verrouillage.

2. Appareil de travail filaire selon la revendication 1, dont la partie de raccordement (24), dans la position de libération, permet une connexion ou une séparation du connecteur (32) .

3. Appareil de travail filaire selon l'une quelconque des revendications précédentes, dont la partie de raccordement (24), dans la position de verrouillage, empêche la connexion ou la séparation du connecteur (32).

4. Appareil de travail filaire selon l'une quelconque des revendications précédentes, comprenant un dispositif d'enroulement (20) destiné à enrouler un câble (30) avec un treuil d'enroulement (22) monté de manière à pouvoir être tourné autour d'un axe de pivot (D), dans lequel la partie de raccordement (24) est réalisée comme partie du dispositif d'enroulement (20).

5. Appareil de travail filaire selon la revendication 4, dans lequel le treuil d'enroulement (22) est réalisé comme contre-dépouille (26) pour le connecteur (32) relié à la pièce de raccordement (24) dans la position de verrouillage.

6. Appareil de travail filaire selon l'une quelconque des revendications 4 ou 5, dont la partie de raccordement (24) impose, dans la position de verrouillage, un direction d'insertion qui s'étend sensiblement de manière tangentielle à l'axe de pivot (D).

7. Appareil de travail filaire selon l'une quelconque des revendications 4 à 6, dont la partie de raccordement (24) effectue un mouvement de pivotement en direction de l'axe de pivot (D) depuis la position de libération jusque dans la position de verrouillage.

8. Appareil de travail filaire selon l'une quelconque des revendications précédentes, dont la contre-dépouille (26) est formée par au moins un premier élément de verrouillage (26a, 26b), de préférence l'élément de verrouillage (26a, 26b) est agencé au niveau d'une section de paroi (22a, 22b), orientée à l'horizontale, de l'appareil de travail, de toute préférence l'élément de verrouillage (26a, 26b) s'étend sensiblement de manière transversale à la direction d'insertion de la partie de raccordement (24) dans la position de verrouillage.

9. Appareil de travail filaire selon la revendication 8 en référence à l'une des revendications 4 à 7, dont le premier élément de verrouillage est réalisé comme partie du treuil d'enroulement (22).

10. Appareil de travail filaire selon l'une quelconque des revendications 8 ou 9, comprenant un second élément de verrouillage (26a, 26b) agencé à l'opposé du premier élément de verrouillage (26a, 26b).

11. Appareil de travail filaire selon l'une quelconque des revendications précédentes, dont la partie de raccordement (24) est réalisée comme prise de courant et/ou dans lequel l'appareil de travail présente en outre un dispositif de décharge de traction pour le câble (30).

12. Système constitué d'un appareil de travail filaire selon l'une quelconque des revendications précédentes et d'un câble (30) avec un connecteur (32), dans lequel le connecteur (32) présente au moins un rétrécissement (33) qui est réalisé de manière sensiblement complémentaire à la contre-dépouille (26) de l'appareil de travail.

13. Procédé de fabrication d'une connexion sécurisée entre une partie de raccordement (24) d'un appareil de travail filaire, notamment d'un appareil d'aspiration, et un connecteur (32), comprenant les étapes consistant à :
- relier le connecteur (32) à la partie de raccordement électrique (24) dans une position de libération ;
- faire passer la pièce de raccordement (24) depuis la position de libération jusque dans une position de verrouillage, dans lequel, dans la position de verrouillage, l'appareil de travail forme une contre-dépouille (26) pour le connecteur (32), et **caractérisé en ce que** l'étape consistant à faire passer la partie de raccordement (24) depuis la position de libération jusque dans la position de verrouillage s'effectue via un mouvement de pivotement de la pièce de raccordement (24) .
